Europäisches Patentamt

(19) European Patent Office

Office européen des brevets

(11) Veröffentlichungsnummer: **0 043 172**
**B1**

(12) # EUROPÄISCHE PATENTSCHRIFT

(45) Veröffentlichungstag der Patentschrift:
21.09.83

(51) Int. Cl.³: **C 04 B 33/16, C 04 B 21/08**

(21) Anmeldenummer: **81200729.2**

(22) Anmeldetag: **26.06.81**

(54) **Verfahren zur Herstellung von Ziegelsteinen.**

(30) Priorität: **27.06.80 NL 8003757**

(43) Veröffentlichungstag der Anmeldung:
**06.01.82 Patentblatt 82/1**

(45) Bekanntmachung des Hinweises auf die Patenterteilung:
**21.09.83 Patentblatt 83/38**

(84) Benannte Vertragsstaaten:
**BE DE FR GB IT NL**

(56) Entgegenhaltungen:
**DE-C 64 361**
**FR-A 538 140**
**FR-A-1 009 386**
**FR-A-2 269 505**

**CHEMICAL ABSTRACTS, Band 92, 6. Februar 1980, Seite 267, Zusammenfassung 46220z COLUMBUS, OHIO (US)**

**CHEMICAL ABSTRACTS, Band 84, 31. Mai 1976, Seite 282, Zusammenfassung 154637j COLUMBUS, OHIO (US)**

(73) Patentinhaber: **VERENIGDE BEDRIJVEN BREDERO N.V., P.O. Box 74 Kromme Nieuwe Gracht 66, NL-3500 AB Utrecht (NL)**

(72) Erfinder: **Theissing, Erik Maria, Boekelaan 71, NL-3571 XA Utrecht (NL)**

(74) Vertreter: **van der Beek, George Frans et al, Nederlandsch Octrooibureau Johan de Wittlaan 15 P.O. Box 29720, NL-2502 LS Den Haag (NL)**

## Verfahren zur Herstellung von Ziegelsteinen

Die Erfindung bezieht sich auf ein Verfahren für die Herstellung von Ziegelsteinen, wobei die Rohlinge aus einer aus plastischem Ton und Lavateilchen bestehenden Masse geformt und dann getrocknet und gebrannt werden. Ein solches Verfahren ist durch die DE-C-64 361 bekannt geworden.

Grosse Mengen Ton sind für die Herstellung von Ziegelsteinen deshalb nicht brauchbar, weil das Material beim Brennen Blasen entstehen lässt. Während des Brennens eines Rohlings besteht zwischen dem Kern und der Oberfläche eine Temperaturdifferenz. Aufgrund dieser Differenz können bei einer bestimmten Temperatur noch Gase in den Kern entweichen, während dieser Prozess an der dicht gesinterten Oberfläche bereits abgeschlossen ist. Die Folge davon ist, dass das Material durch sich bildende Blasen aufgebläht wird. In dem Masse, in dem die Aufheiztemperatur höher ist, wird die Temperaturdifferenz grösser sein und nimmt die Wahrscheinlichkeit eines Aufblähens durch Blasenbildung zu.

Das Mass an Ausdehnung wird durch die Menge gasförmiger Produkte verursacht. Wilson hat festgelegt, ob eine Ausdehnung eintritt.

Die folgenden Gase können beim Aufblähen durch Blasenbildung von Steinen eine Rolle spielen:

1. Gase, die beim Verbrennen von organischen Bestandteilen gebildet werden.

2. $SO_2$-Gas, das bei der Zersetzung von Pyrit durch Erhitzen frei wird.

3. $CO_2$, welches durch Zutun von Eisenverbindungen bei einer Temperatur von ca. 400°C durch Umwandlung von CO aus Rauchgas gebildet wird.

4. Wasserdampf, der bei der Dehydrierung von Tonmineralien frei wird.

5. Sauerstoff, der bei der Bildung von Fayalit ($2FeO \cdot SiO_2$) aus $Fe_2O_3$ und $SiO_2$ frei wird.

6. $CO_2$, das beim Erhitzen von Calcium und Magnesiumkarbonat gebildet wird.

Ob eine Blasenbildung bei einem Ton eintritt oder nicht, hängt insbesondere von seiner chemisch/mineralogischen Zusammensetzung ab, jedoch spielen auch Korngrössenverteilung, die Ausschlämmwassermenge, die Volumenmasse des «grünen» Steines (getrocknet und noch nicht gebrannt), die Abmessungen, die Struktur, die Aufheizgeschwindigkeit, der Erweichungspunkt, die Viskosität, die Ofenatmosphäre und dergleichen mehr eine Rolle. Um eine ordentliche Festigkeit des Ziegels zu erzielen, ist eine Brenntemperatur von im Regelfall oberhalb 1000°C zu wählen. Diese Temperatur wird, ausgehend von der Raumtemperatur, innerhalb von ein bis vier Tagen erreicht. Es zeigt sich nun, dass viele Tone unter diesen Bedingungen Aufblähung durch Blasenbildung erleiden. Die chemische Zusammensetzung der Tone, die wegen des Aufbläheffektes nicht für die Herstellung von Ziegelsteinen geeignet sind, liegt innerhalb des sogenannten Wilson'schen Bereichs. Dieser Bereich wird im Aufsatz von H. Wilson mit dem Titel: «Lightweight aggregates for construction industry», Journal of the Canadian Ceramic Society, 44. Jahrgang, 1953, Seiten 44–50, erläutert und besprochen.

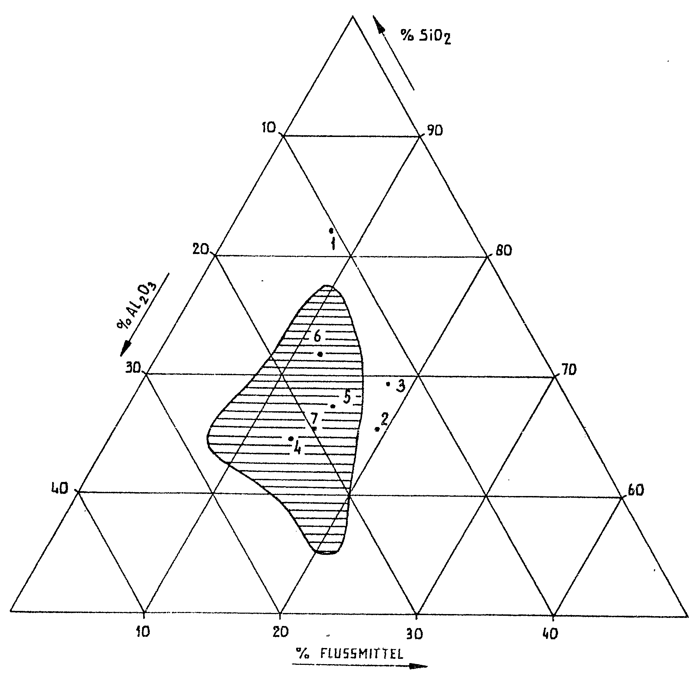

Das Wilson'sche Diagramm ist in der Figur wiedergegeben. Jeder Punkt innerhalb dieses Diagramms entspricht einem bestimmten Gewichtsprozentanteil an $SiO_2$, $Al_2O_3$ und Flussmitteln ($Na_2O$, $K_2O$, $Fe_2O_3$, CaO und MgO). Die sogenannten blasenbildenden Tone (bloating) erscheinen in dem umrandeten schraffierten Teil des Wilson'schen Diagramms. Die chemische Zusammensetzung der nicht durch Blasenbildung aufblähenden Tonsorten liegt ausserhalb dieses schraffierten Bereiches.

Die erwähnte DE-C-64 361 bezieht sich auf ein Verfahren zur Herstellung von Kunststeinen, wobei Lavateilchen mit Fett-Ton trocken gemischt, mit Wasser aufgefeuchtet und geformt werden, um nunmehr an der Luft getrocknet und gebrannt zu werden, wobei die Kunststeine das Aussehen von Hau- oder dergleichen Steinen haben, als ob sie aus derartigem natürlichen Material hergestellt worden wären.

Dagegen ist es Aufgabe der Erfindung, diejenigen Tone, die im Hinblick auf ein Aufblähen für die Herstellung von Ziegelsteinen nicht geeignet waren, auf einfache Weise geeignet zu machen.

Erfindungsgemäss ist das eingangs erwähnte Verfahren dadurch gekennzeichnet, dass die Rohlinge aus einer Masse geformt werden, die aus Ton besteht, dessen chemische Zusammensetzung innerhalb des schraffierten Bereichs in dem in der Figur dargestellten Wilson'schen Diagramm liegt, dem Lavateilchen in einer solchen Menge beigefügt wurden, dass die chemische Zusammensetzung der Ton/Lava-Mischung ausserhalb des schraffierten Bereichs des in der Figur dargestellten Wilson'schen Diagramms zu liegen kommt.

In Anbetracht der Tatsache, dass die nicht zur Blasenbildung neigenden Tone selten zu werden beginnen, wohingegen von den Tonen, die bislang zur Verwendung in der Ziegelindustrie unbrauchbar sind, grosse Mengen verfügbar sind, ist der erfindungsgemässe Vorschlag für die Ziegelindustrie ein Ausweg.

Lava ist ein billiges Material, welches in grossen Mengen u.a. in Deutschland (im Gebiet der Eifel) und Frankreich (Auvergne) vorkommt. Es handelt sich um ein poröses, basaltartiges Material, das im Tagebau durch Brechen gewonnen wird. Es ist durch schnelles Erstarren von ausgetretenem vulkanischem Material entstanden. Die Kornoberfläche ist rauh, mit offenen Poren. Die Kornporosität beträgt maximal 40 Vol.-%.

Lava wird in Betonwarenfabriken als Zuschlagstoff bei der Herstellung von Blöcken verwendet. Ein anderer Anwendungsbereich ist der Strassenbau. Insbesondere die Korngrösse zwischen 2 mm und 11 mm ist bei diesen bekannten Anwendungen nützlich. Die Korngrösse bis 3 mm wird ungern verwendet und ist deshalb sehr preiswert. Gerade diese Korngrösse ist hervorragend als Beimengung zu den zur Blasenbildung neigenden Tone geeignet. Deshalb ist es empfehlenswert, dass die Lavateilchen im wesentlichen kleiner als 3 mm sind, wobei weniger als 1% grösser ist als 6 mm.

Lava ist ein Material, welches weit ausserhalb des Wilson'schen Diagramms fällt. Eine vorkommende Sorte setzt sich zusammen aus 45% $SiO_2$, 20% $Al_2O_3$ und 35% Flussmitteln. Das Material ist sehr reich an Silikaten, ohne dass es jedoch Sand enthält. Letzteres ist für das Brennen in Zusammenhang mit dem Quarzsprung verhängnisvoll. Lava ist keine Tonart, wenngleich sie chemisch dem Ton ähnlich ist, weil Lava eine viel gröbere Kornstruktur hat.

Die Korngrösse von Lava bis 3 mm ist zu einem Teil kleiner als 100 µm. Diese Teilchen haben erkennbar einen chemischen Austausch mit den Teilchen des Tons. Sie holen den Ton aus dem Wilson'schen Diagramm. Die gröberen Teilchen gehen ausschliesslich an der Oberfläche eine Reaktion ein, jedoch bilden sie für die entstandenen Gase eine Möglichkeit zu deren Austreten.

Lava ist keine Schamotte, weil Schamotte im allgemeinen einen höheren Erweichungspunkt hat als Ton, wohingegen dies bei Lava nicht der Fall ist.

In Lava entstehen keine gasförmigen Produkte mehr beim Erhitzen. Durch die Zugabe von Lava wird die durchschnittliche Menge gasförmiger Produkte herabgesetzt, so dass das Ausmass an Ausdehnung herabgesetzt wird.

Die Verwendung von Lava als ein Mittel, um ein Aufblähen durch Blasenbildung bei bestimmten Tonen zu verhindern, führt zu einer Reihe von zusätzlichen Vorteilen, wie Brennstoffeinsparung infolge einer kürzeren Trocknungszeit und einer niedrigeren Brenntemperatur, möglicherweise auch einer Herabsetzung der Fluoremission beim Brennen in Abhängigkeit von der Art der Lava, sowie zu einem festeren Fertigerzeugnis, welches darüber hinaus frostbeständiger ist. Die kurze Trocknungszeit ist eine Folge der Porenstruktur des Lavamaterials. Da Gemische aus Lavamaterial gewöhnlich bei einer niedrigeren Temperatur sintern, kann die Brenntemperatur herabgesetzt werden oder die Brenndauer kann weiter verkürzt werden. Hierdurch wird nicht allein eine Einsparung an Brennstoffen erzielt, sondern es wird auch der Nutzungsgrad des Ofens grösser. Bei Zurückführung auf die Energie als Grundlage ist es auch von Wichtigkeit, dass Lava im Gegensatz zu Ton kein Wasser bei Temperaturen zwischen 100°C und 500°C abspaltet. Da Lava keine Fluoride enthält, die beim Erhitzen entweichen können, ist die Verwendung von Lava umweltfreundlich. Die Verbesserung der Qualität der Steine ist aus den günstigeren Werten für die Druckfestigkeit und die Frostbeständigkeit ersichtlich.

Ziegelsteine müssen die Fähigkeit zur Feuchtigkeitsaufnahme besitzen. Die Frostbeständigkeit ist abhängig von dieser Fähigkeit sowie von der Zeitdauer, während der eine Feuchtigkeitsmenge aufgenommen wird. Hierbei kommt es nämlich darauf an, wie lange es dauert, bis der sogenannte kritische Feuchtigkeitsgehalt – das ist der Gehalt, bei dem im Falle von Frost ein Bruch auftritt – erreicht wird. Durch die Verwendung von Lavamaterial wird diese Zeitdauer verlängert, was sich auf die Frostbeständigkeit günstig auswirkt. Allerdings wird im allgemeinen gelten, dass die Porosität der Lavakörner grösser ist als 10 Vol.-%.

Die vorgenannten Vorteile sind zweitrangig. Bei der in Rede stehenden Erfindung geht es in erster Linie darum, grössere Mengen Ton verwenden zu können, welche bislang wegen ihrer Aufbläheigenschaften ungeeignet waren. Dazu wird unter Zugrundelegung des Wilson'schen Diagramms eine sorgfältig gewählte Menge Lavateilchen in der Weise verwendet, dass die chemische Zusammensetzung des Gemischs ausserhalb des in der Figur schraffierten Bereichs liegt.

In der Figur sind die chemischen Zusammensetzungen einer Anzahl von Tonen angegeben. Die Verweisungsziffern in der Figur beziehen sich auf die folgenden Tone:

1 = ein Ton von der Maas
2 = ein Ton von der Waal
3 = ein Ton vom Rhein
4 = ein Tertiär-Ton aus Westbrabant
5 = ein Bassinton aus der Provinz Gelderland
6 = ein frühtertiärer Ton aus dem Raum Boom
7 = ein tertiärer Ton aus dem westlichen Teil der Provinz Nordbrabant.

Von diesen Tonen sind allein die Nummern 1, 2 und 3 als solche geeignet, um daraus unter normalen Umständen Ziegelsteine herstellen zu können. Die Tone 4 bis einschliesslich 7 liegen innerhalb des schraffierten Bereichs des Wilson'schen Diagramms und sind somit nicht geeignet, um daraus Ziegelsteine herzustellen. Durch Beifügung einer passenden Menge Lavateilchen hat sich herausgestellt, dass diese Tone 4 bis einschliesslich 7 durchaus zu Ziegelsteinen verarbeitet werden können, wobei sich herausstellte, dass diese Ziegelsteine darüber hinaus hervorragende Eigenschaften besitzen.

Beispiel

Aus dem mit Nummer 7 im Diagramm angegebenen tertiären Ton aus dem westlichen Teil von Nordbrabant wurden, ohne Beifügung von Lavateilchen, kleinformatige Steine mittels einer Strangpresse geformt. Die Abmessungen dieser kleinen Steine betrug ca. 12,0×6,5×3,5 cm. Nach dem Trocknen wurden ein Teil dieser kleinformatigen Steine in einem Elektroofen gebrannt (Aufheizgeschwindigkeit 50°C/h, maximale Temperatur 1000°C, Aufrechterhaltung dieser Temperatur für die Dauer von 24 Stunden) und ein anderer Teil wurde in einem Flammofen gebrannt (Aufheizgeschwindigkeit 14 bis 1°C pro Stunde, maximale Temperatur 1010°C, Aufrechterhaltung dieser Temperatur während 45 Stunden). Nach dem Brennen stellte sich heraus, dass die kleinformatigen Steine in beiden Fällen Blasenbildung zeigten. Der Ausdehnungsfaktor betrug ca. 1,5. Um mit diesem Ton einen Ziegelstein herzustellen, der keine Ausdehnung zeigt, würde man die Aufheizgeschwindigkeit drastisch herabsetzen müssen, wodurch die Produktionsgeschwindigkeit in unannehmbarer Weise absinken würde.

Anschliessend wurde der gleiche Ton mit Lavateilchen mit einer Teilchengrösse bis zu 3 mm vermengt. Das Gewichtsverhältnis zwischen dem trockenen Ton und der Lava betrug 60:40. Dieses Mengenverhältnis war so gewählt worden, dass die Zusammensetzung des Gemischs ausserhalb des «bloating»-Bereichs im Wilson'schen Diagramm zu liegen kam. Aus der entstandenen Mischung wurden Formziegelsteine gefertigt. Die Steine wurden nach ihrem Trocknen gleichzeitig mit den vorgenannten kleinformatigen Steinen im Flammofen unter gleichen Bedingungen gebrannt. Sie wiesen nach dem Brennen keine Ausdehnung mehr auf. Das Fertigerzeugnis erwies sich darüber hinaus als fester im Vergleich mit Steinen, die aus dem in üblicher Weise verarbeiteten, keine Blasen treibenden Ton hergestellt und unter den gleichen Bedingungen gebrannt worden waren. Auch die Frostbeständigkeit hatte nachweisbar zugenommen.

Die Lavateilchen halten das Material im Zusammenhang mit der Skeletbildung länger porös. Die Gase können dadurch nachhaltig entweichen. Darüber hinaus wird durch die Beimengung von Lava die Menge schädlicher Bestandteile pro Gewichtseinheit vermindert. Im allgemeinen wird man einem zur Blasenbildung neigenden Ton wenigstens 10% Lavateilchen beimengen. Diese Menge kann selbstverständlich viel grösser sein. Unter allen Umständen wird die Mischung ausserhalb des schraffierten Bereichs liegen müssen.

**Patentansprüche**

1. Verfahren für die Herstellung von Ziegelsteinen, wobei die Rohlinge aus einer aus plastichem Ton und Lavateilchen bestehenden Masse geformt und dann getrocknet und gebrannt werden, dadurch gekennzeichnet, dass die Rohlinge aus einer Masse geformt werden, die aus Ton besteht, dessen chemische Zusammensetzung innerhalb des schraffierten Bereichs in dem in der Figur dargestellten Wilson'schen Diagramm liegt, dem Lavateilchen in einer solchen Menge beigefügt wurden, dass die chemische Zusammensetzung der Ton/Lava-Mischung ausserhalb des schraffierten Bereichs des in der Figur dargestellten Wilson'schen Diagramms zu liegen kommt.

2. Verfahren gemäss Anspruch 1, dadurch gekennzeichnet, dass die Lavateilchen im wesentlichen kleiner sind als 3 mm, wobei weniger als 1% grösser sind als 6 mm.

**Revendications**

1. Procédé pour la fabrication de briques, suivant lequel on moule les pièces brutes à partir d'une masse composée d'argile plastique et de particules de lave, puis on les sèche et on les cuit, caractérisé par le fait que l'on moule les pièces brutes à partir d'une masse qui est formée à partir d'une argile dont la composition chimique se situe à l'intérieur de la zone hachurée du diagramme de Wilson représenté sur la figure du dessin, et à laquelle sont ajoutées des particules de lave en une quantité telle que la composition chimique du mélange argile/lave vienne se situer en dehors de la zone hachurée du diagramme de Wilson représenté sur la figure du dessin.

2. Procédé selon la revendication 1, caractérisé par le fait que les particules de lave ont un diamètre essentiellement inférieur à 3 mm, moins de 1% d'entre elles ayant un diamètre supérieur à 6 mm.

**Claims**

1. Process for the manufacture of clay bricks, the blanks being formed from a composition consisting of plastic clay and lava particles, and then dried and fired, characterised in that the blanks are formed from a composition consisting of clay, the chemical composition of which is within the shaded region in the Wilson diagram shown in the figure, and to which lava particles have ben added in an amount such that the chemical composition of the clay/lava mixture is outside the shaded region of the Wilson diagram shown in the figure.

2. Process according to Claim 1, characterised in that the majority of the lava particles are smaller than 3 mm, fewer than 1% being larger than 6 mm.